# FASCICULE DE BREVET EUROPEEN

(11) **EP 3 384 224 B1**
(45) Date de publication et mention de la délivrance du brevet: **09.09.2020**
(21) Numéro de dépôt: 16808958.9
(22) Date de dépôt: 30.11.2016
(51) Int. Cl.: F28F 9/02, F28D 1/053

(54) **ÉCHANGEUR DE CHALEUR POUR VÉHICULE AUTOMOBILE COMPRENANT UNE BOÎTE COLLECTRICE**
KRAFTFAHRZEUGWÄRMETAUSCHER MIT EINEM AUSGLEICHSBEHÄLTER
MOTOR VEHICLE HEAT EXCHANGER COMPRISING A HEADER TANK

(30) Priorité: 30.11.2015 FR 1561570
(43) Date de publication de la demande: 10.10.2018
(73) Titulaire: Valeo Systemes Thermiques, 78320 Le Mesnil-Saint-Denis (FR)
(72) Inventeur: VALLEE, Nicolas, 51110 Bazancourt (FR); WASCAT, Frédéric, 51370 Saint Brice Courcelles (FR); GARCIA, Jean-Jacques, 51100 Reims (FR); POTTEAU, Stéphane, 51360 Beaumont sur Vesle (FR); CORMET, Nicolas, 51100 Reims (FR)
(74) Mandataire: Tran, Chi-Hai
(86) Numéro de dépôt international: PCT/EP2016/079317
(87) Numéro de publication internationale: WO 2017/093340

(56) Documents cités:
- EP-A1- 2 455 697
- DE-A1- 10 250 441
- FR-A1- 2 912 209
- FR-A1- 2 947 331

## Description

La présente invention a pour objet un échangeur de chaleur comprenant une boîte collectrice, en particulier pour véhicule, notamment pour véhicule automobile. FR 2 947 331 divulgue un échangeur de chaleur selon le préambule de la revendication 1.

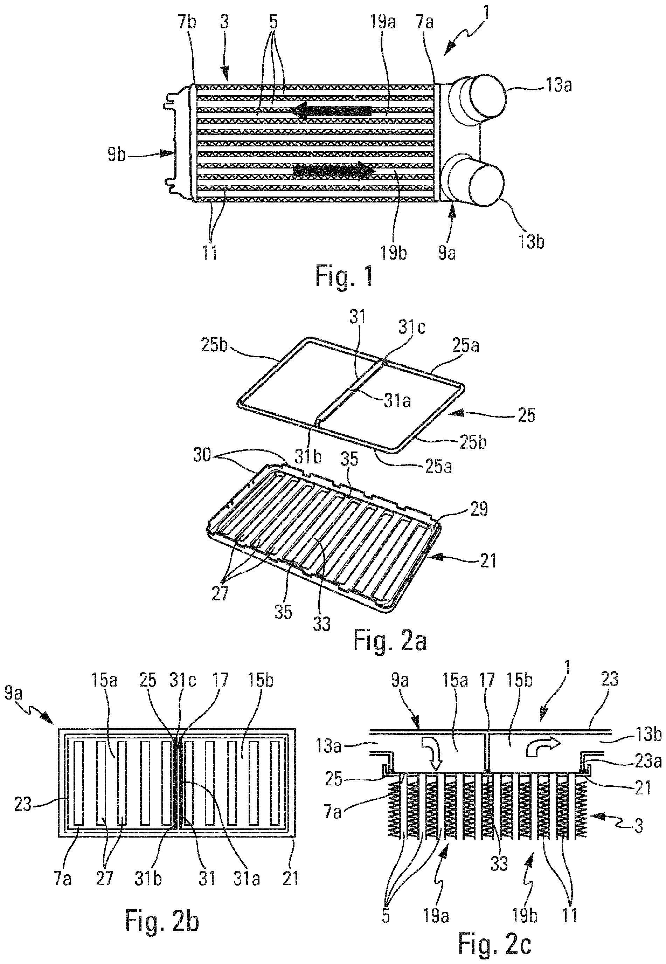

Dans ce domaine, il est connu des échangeurs de chaleur comprenant un faisceau de tubes disposé entre deux boîtes collectrices. Les boîtes collectrices comprennent une plaque collectrice, un joint d'étanchéité et un couvercle assemblés entre eux. L'une des boîtes collectrices est divisée en deux compartiments par une cloison transversale. Une partie du joint d'étanchéité permet d'isoler les compartiments l'un de l'autre. Chacun des compartiments communique avec une première ou une deuxième partie ou passe du faisceau de tubes définissant ainsi une circulation dite en U. Ce type d'échangeur et de boîte collectrice est représenté aux figures 2a à 2c.

Ces échangeurs sont parcourus par un même fluide mais de température différente dans chaque passe.

Dans le cas où les températures sont très différentes, les tubes de la première passe et les tubes de la deuxième passe connaissent une dilatation différente engendrant des contraintes au niveau des tubes, notamment de leurs ouvertures au niveau du contact avec la plaque collectrice. Ces contraintes sont d'autant plus importantes en ce qui concerne les tubes situés dans la zone d'interface entre les deux passes. Ceux-ci subissent un plus grand choc thermique, ce qui peut conduire à des fuites voire une rupture entre la partie ouverte des tubes et la plaque collectrice.

Plusieurs solutions existent pour résoudre ce problème. Il est ainsi connu de renforcer la partie ouverte des tubes, notamment en insérant un élément à l'intérieur du tube. Ces méthodes nécessitent par conséquent de nombreux éléments supplémentaires rendant plus complexe la fabrication de tels échangeurs.

Il a également été proposé de séparer les deux parties par un tube inactif formant une barrière thermique. Un tube inactif, appelé aussi tube mort, est un tube dans lequel aucun fluide ne circule. Cette solution a l'inconvénient de reporter le choc thermique sur les tubes adjacents au tube inactif, tout en pénalisant significativement la performance thermique à surface d'échangeur donnée.

Il existe donc un besoin d'un échangeur de chaleur remédiant aux inconvénients précédents, notamment un échangeur dans lequel le choc thermique entre les deux parties du faisceau est réduit.

L'invention vise, à cet effet un échangeur de chaleur, notamment pour véhicule automobile, comprenant une boîte collectrice et un faisceau de tubes, ladite boîte collectrice comprenant une plaque collectrice, un couvercle et un joint d'étanchéité localisé entre la plaque collectrice et le couvercle, ladite boîte collectrice étant divisée en deux compartiments par une cloison transversale, lesdits compartiments étant configurés pour communiquer respectivement avec deux parties du faisceau, ledit joint d'étanchéité isolant lesdits compartiments l'un de l'autre et obturant partiellement l'ouverture d'au moins un tube, dit tube partiellement obturé, débouchant dans ladite boîte collectrice à proximité de ladite cloison transversale. Ladite cloison transversale comprend par ailleurs au moins un moyen d'appui apte à faire pression sur ledit joint d'étanchéité au niveau du ou desdits tubes partiellement obturés, le ou lesdits moyens d'appui étant des nervures, perpendiculaires à ladite cloison transversale.

Par à « proximité de », on entend le ou les tubes au voisinage, c'est-à-dire le ou les tubes débouchant au plus proche de la cloison. Autrement dit, le ou lesdits tubes débouchant dans ladite boîte collectrice à proximité de ladite cloison transversale sont situés dans la zone d'interface entre les deux parties du faisceau, la zone d'interface pouvant comprendre plusieurs tubes de part et d'autre de la cloison transversale. La zone d'interface se définit plutôt en terme de surface par rapport à la surface totale du faisceau de l'échangeur qu'en nombre de tubes. Par exemple, pour un échangeur comportant une unique cloison séparant le faisceau en deux parties sensiblement égales, la zone d'interface est le tiers central de la surface du faisceau.

En obturant partiellement au moins un tube du faisceau situé à proximité de ladite cloison transversale, le débit du fluide est réduit et l'écart de température entre les deux parties du faisceau au niveau des tubes partiellement obturés est diminué. La différence de dilatation dans la zone d'interface entre les deux parties est ainsi moins importante et les risques de fuites voire de rupture entre les extrémités des tubes et la plaque collectrice sont réduites. Cela étant, le ou lesdits tubes participent encore à l'échange thermique.

Selon différents modes de réalisation de l'invention, qui pourront être pris ensemble ou séparément :
- ledit tube partiellement obturé est le tube débouchant au plus proche de la cloison transversale dans le compartiment de la boîte collectrice,
- ledit joint d'étanchéité est configuré pour que le ou lesdits tubes partiellement obturés soient situés d'un côté de la cloison transversale,
- ledit joint d'étanchéité est configuré pour que le ou lesdits tubes partiellement obturés soient situés de part et d'autres de la cloison transversale,
- ledit joint d'étanchéité est configuré pour que le ou lesdits tubes soient partiellement obturés de manière symétrique, par rapport à un plan coupant la section de passage du tube selon sa longueur, en deux parties sensiblement égales.
- ledit joint d'étanchéité est configuré pour que le ou lesdits tubes soient partiellement obturés de manière asymétrique, par rapport à un plan coupant la section de passage du tube selon sa longueur, en deux parties sensiblement égales.
- ledit joint d'étanchéité comprend une partie d'obturation obturant partiellement l'ouverture du ou desdits tubes partiellement obturés,
- ledit joint d'étanchéité est configuré pour conférer en outre une étanchéité périphérique entre la plaque et le couvercle,
- ledit joint d'étanchéité est de contour sensiblement rectangulaire avec deux grands côté et deux petits côtés,
- ladite partie d'obturation comprend une bretelle transversale s'étendant entre les deux grands côtés du joint d'étanchéité,
- ladite partie d'obturation est localisée sur ladite bretelle,
- ladite partie d'obturation est un élargissement localisé de ladite bretelle,
- ladite partie d'obturation comprend au moins une languette apte à obturer partiellement l'ouverture du ou desdits tubes partiellement obturés,
- ledit joint d'étanchéité comprend au moins deux bretelles s'étendant entre les deux grands côtés dudit joint d'étanchéité,
- lesdites au moins deux bretelles sont reliées par la ou lesdites languettes,
- lesdites nervures sont configurées pour s'étendre en direction des tubes partiellement obturés,
- ladite cloison transversale comprend deux desdites nervures,
- ladite cloison transversale comprend quatre desdites nervures,
- la ou lesdites nervures sont situées à proximité des extrémités de ladite cloison transversale,
- la ou lesdites nervures sont situées sur une même moitié de ladite cloison transversale,
- la ou lesdites nervures s'étendent de part et d'autre de ladite cloison transversale,
- ledit joint d'étanchéité s'étend entre chacune des nervures,
- ladite cloison transversale comprend deux parois parallèles reliées par une face en appui sur le joint d'étanchéité,
- au moins une des deux parois est située de manière à faire pression sur ledit joint d'étanchéité au niveau du ou desdits tubes partiellement obturés,
- ledit joint d'étanchéité est configuré de manière à s'étendre sur un côté de ladite cloison transversale.
- ledit joint d'étanchéité comprend un détrompeur s'étendant sur un côté de ladite cloison transversale.
- ledit échangeur est configuré pour permettre une circulation en série d'un fluide de l'une des parties du faisceau communiquant avec l'un des deux compartiments de ladite boîte collectrice, à l'autre partie dudit faisceau,
- le ou lesdits tubes sont partiellement obturés à chacune de leur ouverture,
- ledit joint d'étanchéité de chacune des deux boîtes collectrices obture partiellement l'ouverture d'au moins un tube,
- le ou lesdits tubes partiellement obturés ont une section de passage réduite selon leur largeur,
- le ou lesdits tubes partiellement obturés ont une section de passage réduite selon leur longueur,
- entre 25 et 75% de la section du ou de chacun desdits tubes partiellement obturé est obturée,
- de préférence 50% de la section du ou de chacun desdits tubes partiellement obturés est obturée,
- l'une des deux parties, dite partie chaude, est d'une température supérieure à la température de l'autre partie, dite partie froide,
- le ou lesdits tubes partiellement obturés sont situés du côté de ladite partie chaude,
- ledit échangeur de chaleur comprend en outre au moins un tube partiellement obturé dans ladite partie froide.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématique annexés.

Sur ces dessins :
- la figure 1 est une vue en perspective d'un échangeur de chaleur selon l'invention,
- les figures 2a à 2c représentent l'art antérieur :
   - la figure 2a est une vue en perspective d'une plaque collectrice et d'un joint d'étanchéité pour une boîte collectrice,
   - la figure 2b est une vue schématique du dessus d'une boîte collectrice comprenant la plaque collectrice et le joint d'étanchéité de la figure 2a,
   - la figure 2c est une vue schématique de côté en coupe d'une partie d'un échangeur de chaleur comprenant la boîte collectrice de la figure 2b,

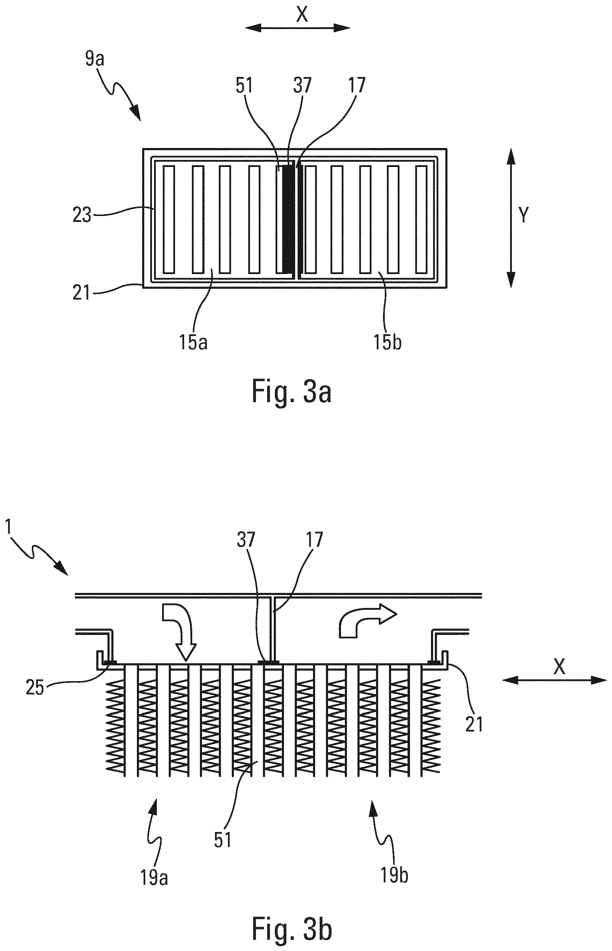

- les figures 3a et 3b représentent un premier mode de réalisation d'une boîte collectrice conforme à l'invention :
   - la figure 3a est une vue schématique du dessus de ladite boîte collectrice,
   - la figure 3b est une vue schématique de côté en coupe d'une partie d'un échangeur de chaleur comprenant la boîte collectrice de la figure 3a,

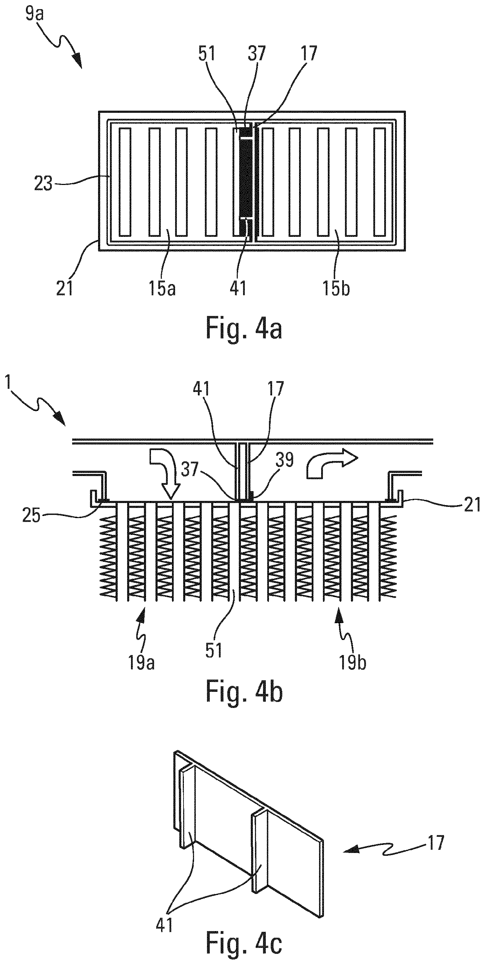

- les figures 4a et 4b sont des figures semblables aux figures 3a et 3b représentant un deuxième mode de réalisation conforme à l'invention,
- la figure 4c est une vue schématique en perspective d'une cloison transversale pour la boîte collectrice des figures 4a et 4b,

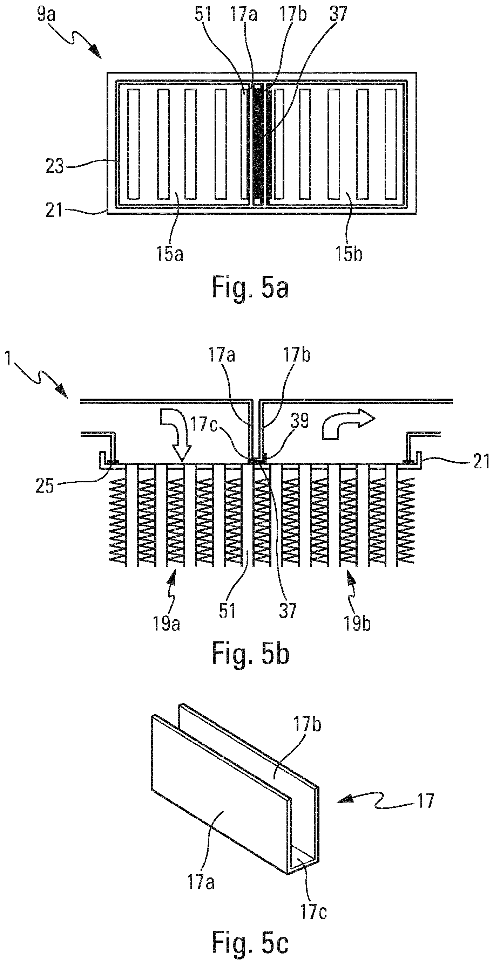

- les figures 5a et 5b sont des figures semblables aux figures 3a et 3b représentant un troisième mode de réalisation de l'invention,
- la figure 5c est une vue schématique en perspective d'une autre cloison transversale pour la boîte collectrice des figures 5a et 5b,

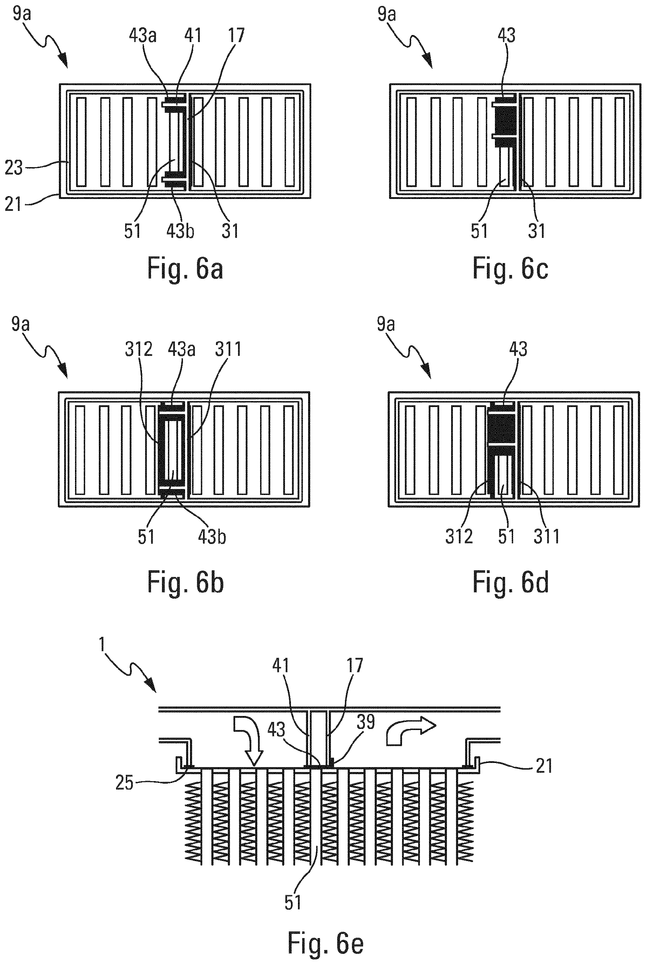

- les figures 6a à 6d et 6e, sont des figures semblables à la figure 3a, respectivement 3b, représentant quatre variantes d'un quatrième mode de réalisation de l'invention,

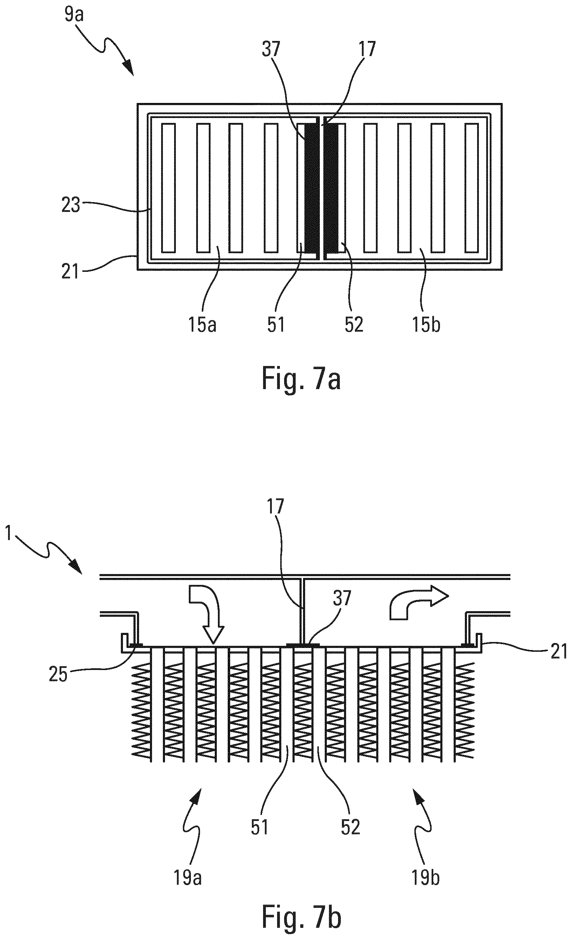

- les figures 7a et 7b sont des figures semblables aux figures 3a et 3b représentant un cinquième mode de réalisation de l'invention,

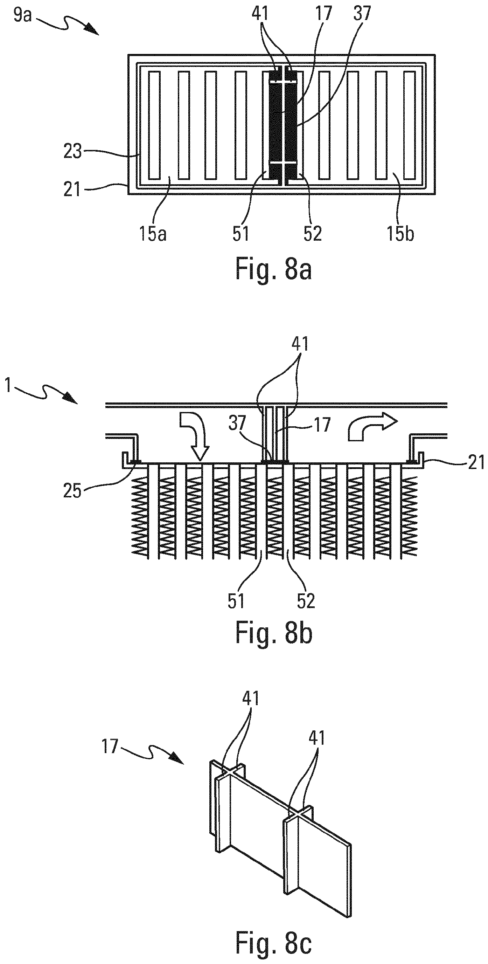

- les figures 8a et 8b sont des figures semblables aux figures 3a et 3b représentant un sixième mode de réalisation de l'invention,
- la figure 8c est une vue schématique en perspective d'une cloison transversale pour la boîte collectrice des figures 8a et 8b,

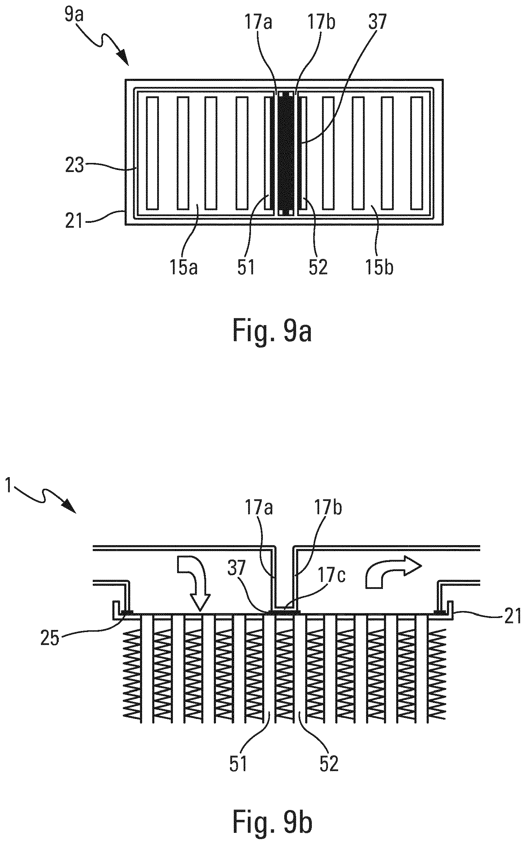

- les figures 9a et 9b sont des figures semblables aux figures 3a et 3b représentant un septième mode de réalisation de l'invention,

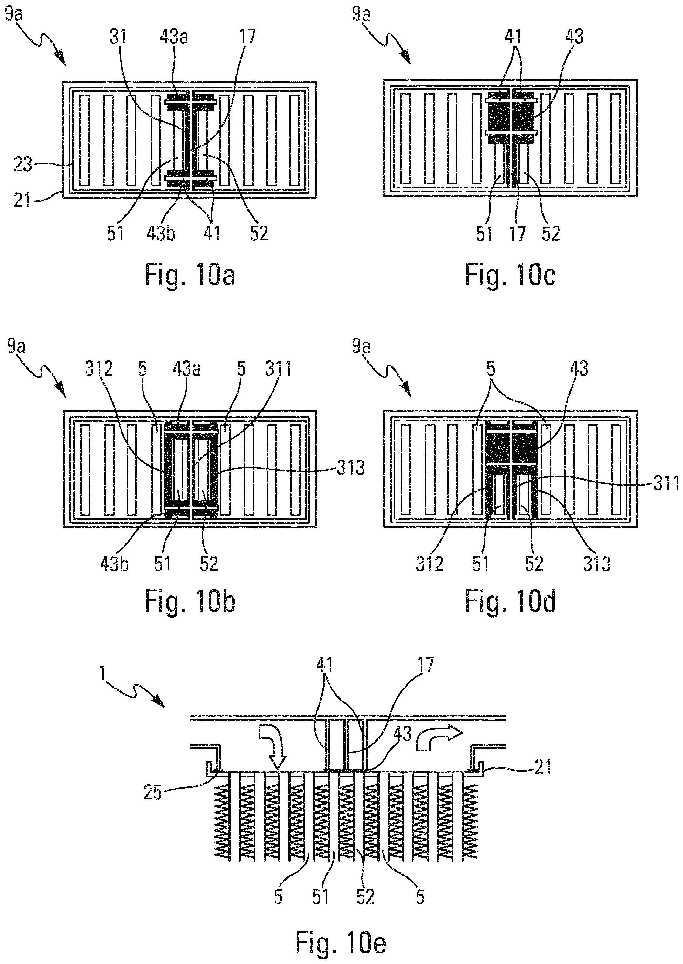

- les figures 10a à 10e sont des figures semblables aux figures 3a et 3b représentant un huitième mode de réalisation de l'invention.

Comme illustré aux figures 1 et 2a à 2c, l'invention trouvera ses applications dans un échangeur de chaleur 1, en particulier un échangeur de chaleur 1 pour véhicule, permettant un échange de chaleur entre un premier fluide et un second fluide. Il s'agit de préférence d'un échangeur de chaleur 1 dont la circulation est dite en U.

Ledit échangeur 1 comprend un faisceau 3 de tubes 5 dans lequel circule le premier fluide. Les tubes 5 de l'échangeur 1 sont, par exemple, plats et comprennent deux grandes faces planes parallèles opposées, reliées par des bords latéraux du tube 5. La distance entre les bords latéraux du tube 5 est appelée longueur du tube, et la distance entre les deux grandes faces du tube 5 est appelée largeur. Chaque tube 5 comprend deux ouvertures 7a et 7b débouchant dans une première et une seconde boîtes collectrices 9a et 9b.

On définit le vocabulaire suivant :
- Réduire la section de passage d'un tube 5 selon sa largeur correspond à le remplacer virtuellement par un tube dont la section de passage est de largeur inférieure et de même longueur en condamnant une partie longitudinale de sa section de passage. C'est une obturation de l'ouverture 7a, 7b du tube sur toute sa longueur, et seulement sur une partie de sa largeur.
- Réduire la section de passage d'un tube 5 selon sa longueur correspond à le remplacer virtuellement par un tube dont la section de passage est de longueur inférieure et de même largeur en condamnant une partie latérale de sa section de passage. C'est une obturation de l'ouverture 7a, 7b du tube sur toute sa largeur, et seulement sur une partie de sa longueur.

Si le tube 5 n'est pas plat et comporte par exemple une section de passage elliptique, la largeur s'entend comme la distance du segment que définit le petit axe de sa section de passage et la longueur comme la distance du segment que définit le grand axe de sa section de passage.
Ainsi :
- Réduire la section de passage d'un tube 5 de section elliptique selon sa largeur correspond à le remplacer virtuellement par un tube dont la section de passage est tronquée par une droite parallèle au grand axe. C'est une obturation de l'ouverture 7a, 7b du tube selon une droite parallèle au grand axe qui coupe l'ouverture 7a, 7b du tube en deux parties : une partie obturée et une partie non obturée.
- Réduire la section de passage d'un tube 5 de section elliptique selon sa longueur correspond à le remplacer virtuellement par un tube dont la section de passage est tronquée par une droite parallèle au petit axe. C'est une obturation de l'ouverture 7a, 7b du tube selon une droite parallèle au petit axe qui coupe l'ouverture 7a, 7b du tube en deux parties : une partie obturée et une partie non obturée.

La géométrie de la section de passage ne se limite pas aux deux exemples cités ci-dessus. La section de passage du tube 5 peut être carrée, ce peut être un losange...

Lesdits tubes 5 peuvent en outre comprendre des intercalaires ou turbulateurs, non représentés, disposés à l'intérieur desdits tubes 5, pour améliorer l'échange thermique et la résistance à la pression interne desdits tubes.

Le second fluide circule entre les tubes 5. Des intercalaires 11, pourront être agencés entre ces tubes 5, notamment des intercalaires ondulés comme représentés ici. De tels intercalaires 11 permettent d'augmenter la surface d'échange thermique entre le premier fluide circulant dans lesdits tubes 5 et le second fluide traversant l'échangeur 1 entre les tubes 5.

Ledit échangeur 1 pourra, en outre, comprendre, par exemple, une bride d'entrée 13a et/ou une bride de sortie 13b pour le premier fluide. Lesdites brides 13a et 13b peuvent être situées sur chacune des boîtes collectrices 9a et 9b ou sur une même boîte collectrice, en fonction de la circulation, en plusieurs passes, du premier fluide dans l'échangeur 1.

Dans la présente invention, il s'agit de préférence d'un échangeur de chaleur 1 dont la circulation, dite en U est en deux passes. Dans ce type d'échangeur l'une des boîtes collectrices 9a est divisée en deux compartiments 15a et 15b par une cloison transversale 17. Chacun des compartiments 15a et 15b communique avec une première partie 19a ou une deuxième partie 19b du faisceau 3 de tubes, le compartiment 15a communiquant avec la partie 19a du faisceau et le compartiment 15b communiquant avec la partie 19b du faisceau 3. Autrement dit, ledit échangeur 1 est configuré pour permettre une circulation en série d'un fluide dans chacune des parties 19a et 19b du faisceau 3 communiquant avec les deux compartiments 15a et 15b de ladite boîte collectrice 9a.

Dans ce type d'échangeur, la bride d'entrée 13a et la bride de sortie 13b sont situées sur la boîte collectrice 9a à double compartiments, comme représenté ici. Ledit premier fluide entre ainsi par la bride d'entrée 13a dans le compartiment 15a qui communique avec la première partie 19a du faisceau 3 puis le fluide est dirigé par la seconde boîte collectrice 9b, comprenant un seul compartiment, vers la seconde partie 19b du faisceau 3 communiquant avec le compartiment 15b de la boîte collectrice 9a pour sortir enfin de l'échangeur 1 par la bride de sortie 13b. Une circulation en U est ainsi définie pour le premier fluide. Ledit fluide est de la sorte de température différente dans chaque passe.

Cela étant, l'invention concerne plus particulièrement la boîte collectrice 9a à double compartiments. Ladite boîte collectrice 9a comprend une plaque collectrice 21, un joint d'étanchéité 25 et un couvercle 23 assemblés entre eux, le joint 25 étant inséré entre le couvercle 23 et la plaque collectrice 21.

Ladite plaque collectrice 21 présente ici une forme sensiblement rectangulaire et comprend des orifices 27 dans lesquels débouchent les ouvertures 7a des tubes 5. Lesdits orifices 27 permettent de solidariser les tubes 5 à la boîte collectrice 9a. Ici, les orifices 27 sont ordonnés en une seule rangée, l'un parallèlement à l'autre, selon une direction correspondant à la direction d'extension longitudinale de la plaque 21. Lesdits orifices 27 de la plaque collectrice 21 ont une forme correspondante à la section des ouvertures 7a desdits tubes 5.

Pour faciliter le maintien étanche dudit couvercle 23, ladite plaque 21 comporte ici une gorge 29 délimitant son périmètre. Ladite gorge 29 a pour fonction d'accueillir ledit joint d'étanchéité 25, destiné à être comprimé par un bord ou pied 23a du couvercle, ledit bord ou pied du couvercle s'insérant à l'intérieur de la gorge 29.

Ladite plaque collectrice 21 comprend en outre des moyens de fixation 30 du couvercle 23. Il peut s'agir par exemple de dents de sertissage 30 comme représenté ici. Lesdites dents 30 s'étendent le long du périmètre de la plaque collectrice 21, depuis le bord extérieur de la gorge 29. Ces dents 30 servent à bloquer le couvercle 23 sur la plaque collectrice 21 lors de l'assemblage. Comme déjà dit, le couvercle 23 pourra être muni d'un pied du couvercle situé sur le contour de son ouverture, celui-ci étant capable de s'insérer dans la gorge 29.

De manière classique, ledit joint d'étanchéité 25 est configuré pour conférer une étanchéité périphérique entre la plaque 21 et le couvercle 23. Il est de contour sensiblement rectangulaire avec deux grands côtés 25a et deux petits côtés 25b. Il peut être sous la forme d'un bourrelet continu venant se loger dans la gorge 29 de ladite plaque collectrice 21. Dans la figure 2a, le joint 25 est représenté dans son état non comprimé et avant montage sur la plaque collectrice 21.

Comme mentionné précédemment, ladite boîte collectrice 9a est divisée en deux compartiments 15a et 15b par une cloison transversale 17. Lesdits compartiments 15a et 15b sont configurés pour communiquer respectivement avec les deux parties 19a et 19b du faisceau 3. Selon l'invention, ledit joint d'étanchéité 25 peut également être apte à isoler lesdits compartiments 15a et 15b l'un de l'autre. Il peut comprendre à cette fin, comme représenté ici, une bretelle transversale 31, de préférence plate. Elle est raccordée aux deux grands côtés 25a du joint d'étanchéité 25, sensiblement en leurs milieux. Ladite bretelle 31 est destinée à prendre appui sur une partie transversale 33 de la plaque collectrice 21 entre deux tubes 5 successifs du faisceau 3, de manière à ce que, lors de l'assemblage, la bretelle 31 soit comprimée entre la plaque collectrice 21 et la cloison transversale 17 de la boîte collectrice 9a.

Ladite bretelle 31 présente une portion centrale 31a de section constante et deux extrémités 31b et 31c raccordées aux deux grands côtés 25a du joint d'étanchéité 25. La portion centrale 31a a une largeur et une épaisseur supérieures à celles des extrémités 31b et 31c. De préférence, la largeur de la bretelle 31 est supérieure à la largeur de la cloison transversale 17. De manière complémentaire, ladite plaque collectrice 21 comprend deux encoches 35 en vis-à-vis. Ces encoches 35 sont situées sur les extrémités de la partie transversale 33 de la plaque collectrice 21 destinée à recevoir ledit joint 25. Ces encoches 35 sont destinées à recevoir les extrémités 31b et 31c de la bretelle 31, tandis que la partie centrale 31a repose sur ladite partie transversale 33 de ladite plaque collectrice 21 et le contour rectangulaire dudit joint 25 est logé dans la gorge 29 de ladite plaque collectrice 21. Cette configuration du joint 25 et de la plaque collectrice 21 assure un bon positionnement du joint 25 et par conséquent garantit une bonne étanchéité, en particulier au niveau de ladite bretelle 31.

Comme illustré aux figures 3a, 3b et suivantes, dans la présente invention, en plus d'assurer une étanchéité entre les deux compartiments 9a et 9b, voire une étanchéité entre le couvercle 23 et la plaque collectrice 21, le joint d'étanchéité 25 est apte à obturer partiellement l'ouverture d'au moins un tube 5 débouchant dans ladite boîte collectrice 9a à côté de ladite cloison transversale 17. Un tel tube sera appelé par la suite tube partiellement obturé 51. Compte-tenu de la correspondance de forme entre les orifices 27 situés dans la plaque collectrice 21 et le contour des tubes, cela revient à dire que ledit joint d'étanchéité 25 recouvre partiellement le ou lesdits orifices 27 situés à côté de ladite cloison 17.

De façon avantageuse, le joint d'étanchéité 25 comprend une partie d'obturation 37 apte à obturer partiellement l'ouverture 7a du ou desdits tubes partiellement obturés 51. Cette partie d'obturation 37 est issue de matière du reste du joint 25, en particulier de celle située au niveau de la cloison 17. Elle s'étend ici entre les deux grands côtés 25a du joint d'étanchéité 25, sans nécessairement y être reliée. Comme représentée, cette partie d'obturation 37 peut comprendre ladite bretelle 31 décrite précédemment. Celle-ci présente alors une largeur de la portion centrale 31a supérieure à celle de la portion centrale d'un joint de l'art antérieur représenté aux figures 2a à 2c. Ladite bretelle qui a donc été élargie est ainsi apte à obturer partiellement l'ouverture 7a du ou desdits tubes partiellement obturés 51. La bretelle 31 comporte donc un élargissement localisé à la portion centrale 31a.

De façon avantageuse, ladite partie d'obturation 37 est apte à obturer entre 25 et 75% de la section du ou de chacun desdits tubes partiellement obturés 51, de préférence 50% de la section est obturée. Autrement dit, entre 25 et 75%, de préférence 50%, de la section du ou de chacun desdits tubes partiellement obturés 51 est obturée. Une obturation supérieure à 75% reporterait le problème de choc thermique et les risque de fuite et de rupture sur le tube adjacent au tube partiellement obturé 51. Une obturation inférieure à 25% ne permettrait pas de réduire suffisamment le flux et par conséquent l'écart de température et la différence de dilatation entre les parties 19a et 19b du faisceau.

Dans le cas de plusieurs tubes partiellement obturés d'un même côté, l'obturation du tube le plus proche de la cloison 17 sera de préférence supérieur à l'obturation du tube le plus éloigné de la cloison 17.

De préférence, ledit tube partiellement obturé 51 peut être situé dans la partie 19a, c'est-à-dire du côté où le premier fluide entre dans l'échangeur de chaleur 1 ou dans la partie 19b, c'est-à-dire du côté où le premier fluide sort de l'échangeur de chaleur 1. De manière générale, le premier fluide dans la partie 19a est à une température supérieure à la température qu'il présente dans la partie 19b. Dans ce cas la partie 19a est dite partie chaude, la partie 19b est dite partie froide. De façon avantageuse, le tube partiellement obturé 51 est situé du côté de ladite partie chaude 19a. Ce mode de réalisation est représenté aux figures 3 à 6 dans lesquelles un seul tube est partiellement obturé.

On peut également envisager que plusieurs tubes soient partiellement obturés, selon une section d'obturation croissante en se rapprochant de la cloison, par exemple.

Dans un premier mode de réalisation représenté aux figures 3a et 3b, ledit joint d'étanchéité 25 est configuré pour obturer partiellement un seul tube 51 situé du côté de ladite partie chaude 19a. Ledit joint d'étanchéité 25 comprend ladite bretelle dont la portion centrale 31a est élargie par ladite partie d'obturation 37 pour réduire la section de passage du tube 51 selon sa largeur. Autrement dit, ledit tube 51 est partiellement obturé sur toute sa longueur et seulement une partie de sa largeur. Ladite partie d'obturation 37 est maintenue en place par la cloison transversale 17 qui lors de l'assemblage exerce une pression sur celle-ci. Il s'agit ici d'une cloison simple comprenant une seule paroi, rectiligne, s'étendant parallèlement à et entre deux orifices contigus d'introduction des tubes.

Dans un deuxième mode de réalisation représenté aux figures 4a à 4c, ledit joint d'étanchéité 25 est sensiblement identique à celui du premier mode de réalisation. Il comprend en outre un détrompeur 39 permettant d'éviter les erreurs d'assemblage. Celui-ci s'étend sur un côté de ladite cloison transversale 17, en particulier du côté opposé à celui où se trouve le tube partiellement obturé 51. Dans ce mode de réalisation, la cloison transversale 17 représentée à la figure 4c est une cloison comprenant une seule paroi et des moyens d'appui 41. Il s'agit ici de deux nervures 41 configurées pour faire pression sur ledit joint d'étanchéité 25 au niveau du tube partiellement obturé 51 lors de l'assemblage, c'est-à-dire au niveau de la partie d'obturation 37. Les deux nervures 41 sont par exemple perpendiculaires à ladite cloison transversale 17 et s'étendent en direction dudit tube partiellement obturé 51. Lesdites nervures 41 sont situées à proximité des extrémités de ladite cloison transversale 17, la partie d'obturation 37 s'étendant au moins entre chacune desdites nervures 41.

Dans un troisième mode de réalisation représenté aux figures 5a à 5c, le joint d'étanchéité 25 reprend les caractéristiques du mode de réalisation précédent. Ce mode de réalisation se différencie par le type de cloison. Ici, ladite cloison transversale 17, représentée à la figure 5c, est une cloison double, c'est-à-dire ladite cloison transversale comprend deux parois 17a et 17b parallèles reliées par une face inférieure 17c. Ladite face inférieure 17c est en appui sur la partie d'obturation 37 et une des deux parois (ici la paroi 17a) est située de manière à faire pression sur ladite partie d'obturation 37 au niveau du tube partiellement obturé 51.

Dans un quatrième mode de réalisation représenté aux figures 6a à 6e, ladite partie d'obturation 37 est configurée pour réduire la section de passage d'un tube 51 situé du côté de ladite partie chaude 19a, selon sa longueur. Plusieurs variantes sont possibles.

Ainsi, dans la variante de la figure 6a, ladite partie d'obturation 37 est formée par deux languettes 43a et 43b aptes à obturer partiellement l'ouverture dudit tube partiellement obturé 51. Les deux languettes 43a et 43b sont issues de matière de ladite bretelle 31 dont les deux extrémités de la portion centrale 31a s'étendent sur toute la largeur du tube 51, la section de passage du tube 51 étant alors réduite selon sa longueur en deux endroits distincts. Ces deux languettes sont donc un élargissement localisé de la bretelle 31 et plus particulièrement, de la portion centrale 31a de la bretelle 31. Autrement dit, ledit tube 51 est obturé sur toute sa largeur par chacune desdites languettes 43a et 43b, réduisant la section de passage du tube 51 en chacune de ses extrémités latérales. Ladite partie d'obturation 37 est maintenue en place par la cloison transversale 17 qui comprend deux nervures 41, qui lui sont par exemple perpendiculaires, s'étendant en direction dudit tube partiellement obturé 51. Les deux nervures 41 sont situées à proximité des extrémités de ladite cloison transversale 17 de manière à faire pression sur lesdites languettes 43a et 43b lors de l'assemblage de la boîte collectrice 9a. Lesdites languettes sont ici situées de façon symétrique par rapport à un plan coupant la section de passage du tube 5 selon sa longueur, en deux parties sensiblement égales.
Dans la variante de la figure 6b, ladite partie d'obturation 37 est formée par deux languettes 43a et 43b comme décrit dans la figure 6a. En revanche, ledit joint d'étanchéité 25 comprend une deuxième bretelle 312, parallèle à la première 311, s'étendant entre les deux grands côtés 25a dudit joint d'étanchéité 25. Les deux bretelles 311 et 312 sont ainsi reliées par les deux languettes 43a et 43b. Les deux bretelles 311 et 312 sont en appui sur la plaque collectrice 21 de chaque côté du tube partiellement obturé 51. Comme dans la variante de la figure 6a, la cloison transversale 17 comprend deux nervures 41 perpendiculaires situées au niveau des deux languettes 43a et 43b.

Dans la variante de la figure 6c, ladite partie d'obturation 37 est formée par une seule languette 43 issue de matière de ladite bretelle 31. Ainsi, la portion centrale 31a est élargie sur une partie seulement de sa longueur par ladite languette 43 qui s'étend sur toute la largeur du tube 51. Ainsi, la section de passage du tube 51 est réduite selon sa longueur Autrement dit, ledit tube 51 est partiellement obturé sur toute sa largeur et seulement sur une partie de sa longueur. Là encore, ladite partie d'obturation 37 est maintenue en place par la cloison transversale 17 qui comprend deux nervures 41, qui lui sont par exemple perpendiculaires, s'étendant en direction dudit tube partiellement obturé 51. Les deux nervures 41 sont situées à proximité des extrémités de ladite languette 43 de manière à faire pression sur celle-ci lors de l'assemblage de la boîte collectrice 9a. La languette 43 s'étend donc au moins entre les deux nervures 41.

Dans la variante de la figure 6d, ladite partie d'obturation 37 est formée par une seule languette 43 comme décrit dans la figure 6c. En revanche, ledit joint d'étanchéité 25 comprend une deuxième bretelle 312 comme précédemment décrit dans la variante de la figure 6b. Les deux bretelles 311 et 312 sont ainsi reliées par ladite languette. Comme dans la variante de la figure 6c, la cloison transversale 17 comprend deux nervures 41 perpendiculaires situées à proximité des extrémités de ladite languette 43.

Dans les variantes de la figure 6, le joint d'étanchéité 25 peut également comprendre un détrompeur 39, comme représenté à la figure 6e, permettant d'éviter les erreurs d'assemblage.

Dans les modes de réalisation représentés aux figures 7 à 10, ledit échangeur de chaleur 1 comprend en outre au moins un tube partiellement obturé 52 dans la partie 19b, c'est-à-dire dans ladite partie froide. Ledit joint d'étanchéité 25 est pour cela configuré pour obturer partiellement deux tubes 51 et 52 situés de part et d'autres de la cloison transversale 17. Autrement dit, un tube partiellement obturé 51 est situé du côté où le premier fluide entre dans l'échangeur de chaleur 1, c'est-à-dire la partie chaude 19a et un second tube partiellement obturé 52 est situé du côté où le premier fluide sort de l'échangeur de chaleur 1, c'est-à-dire la partie froide 19b.

Là encore, on peut envisager que plusieurs tubes d'un même côté soient partiellement obturés. On peut ainsi envisager que :
- plusieurs tubes soient partiellement obturés dans la partie 19a et un seul tube soit partiellement obturé dans la partie 19b (non représenté),
- un seul tube soit partiellement obturé dans la partie 19a et plusieurs tubes soient partiellement obturés dans la partie 19b (non représenté),
- plusieurs tubes soient partiellement obturés dans la partie 19a et plusieurs tubes soient partiellement obturés dans la partie 19b (non représenté).

Dans un cinquième mode de réalisation représenté aux figures 7a et 7b, ledit joint d'étanchéité 25 est configuré pour obturer partiellement deux tubes 51 et 52 situé de part et d'autres de la cloison transversale 17, une partie chaude et une partie froide. Ledit joint d'étanchéité 25 comprend ladite bretelle 31 dont la portion centrale 31a est élargie de part et d'autre par ladite partie d'obturation 37 pour réduire à la fois la section de passage des tubes 51 et 52, chacun selon leur largeur. Autrement dit, les deux tubes 51 et 52 sont partiellement obturés sur toute leur longueur et seulement une partie de leur largeur. Ladite partie d'obturation 37 est maintenue en place par la cloison transversale 17 qui lors de l'assemblage exerce une pression sur celle-ci. Il s'agit dans ce mode de réalisation d'une cloison simple comprenant une seule paroi 17 comme dans le mode de réalisation des figures 3.

Dans un sixième mode de réalisation représenté aux figures 8a à 8c, ledit joint d'étanchéité 25 est sensiblement identique à celui du cinquième mode de réalisation décrit précédemment. Dans ce mode de réalisation, la cloison transversale 17 représentée à la figure 8c est une cloison comprenant une seule paroi et des moyens d'appui 41. Il s'agit ici de deux nervures 41 configurées pour faire pression sur ledit joint d'étanchéité 25 au niveau des tubes partiellement obturés 51 et 52 lors de l'assemblage, c'est-à-dire au niveau de la partie d'obturation 37. Les deux nervures 41 sont par exemple perpendiculaires à ladite cloison transversale 17 et s'étendent de part et d'autre de celle-ci en direction des deux tubes 51 et 52. Lesdites nervures 41 sont situées à proximité des extrémités de ladite cloison transversale 17, la partie d'obturation 37 s'étendant au moins entre chacune desdites nervures 41.

Dans un septième mode de réalisation représenté aux figures 9a et 9b, le joint d'étanchéité 25 reprend les caractéristiques des joints des deux précédents modes de réalisation. En revanche, la cloison transversale 17 est une cloison double comme celle représentée à la figure 5c, c'est-à-dire ladite cloison transversale comprend deux parois parallèles 17a et 17b reliées par une face inférieure 17c. Ladite face inférieure 17c est en appui sur la partie d'obturation 37 et les deux parois 17a et 17b sont situées de manière à faire pression sur ladite partie d'obturation 37 au niveau de chacun desdits tubes partiellement obturés 51 et 52.

Dans un huitième mode de réalisation représenté aux figures 10a à 10e, ladite partie d'obturation 37 est configurée pour obturer partiellement l'ouverture de deux tubes 51 et 52 situés de part et d'autres de la cloison transversale 17 selon leur longueur comme décrit précédemment dans le quatrième mode de réalisation. Plusieurs variantes sont possibles.

Ainsi, la variante de la figure 10a se rapproche de la variante de la figure 6a. Ladite partie d'obturation 37 est formée par deux languettes 43a et 43b aptes à obturer partiellement l'ouverture desdits tubes partiellement obturés 51 et 52. Les deux languettes 43a et 43b sont issues de matière de ladite bretelle 31 dont les deux extrémités de la portion centrale 31a s'étendent de part et d'autre de la cloison transversale 17 sur toute la largeur des tubes partiellement obturés 51 et 52. Autrement dit, chacun des tubes 51 et 52 est obturé par lesdites languettes 43a et 43b, réduisant la section de passage des tubes 51 et 52 en chacune de leurs ouvertures selon leur longueur. Ladite partie d'obturation 37 est maintenue en place par la cloison transversale 17 qui comprend deux nervures 41, qui lui sont par exemple perpendiculaires, s'étendant de part et d'autre de la cloison transversale 17 en direction desdits tubes partiellement obturés 51 et 52. Les deux nervures 41 sont situées à proximité des extrémités de ladite cloison transversale 17 de manière à faire pression sur lesdites languettes 43 lors de l'assemblage de la boîte collectrice 9a.

Dans la variante de la figure 10b, ladite partie d'obturation 37 est formée par deux languettes 43a et 43b comme décrit dans la figure 6a. En revanche, ledit joint d'étanchéité 25 comprend une deuxième bretelle 312 et une troisième bretelle 313, parallèles à la première bretelle 311, s'étendant entre les deux grands côtés 25a dudit joint d'étanchéité 25. Ces deux bretelles supplémentaires 312 et 313 sont situées de part et d'autre de la première bretelle 311 de manière symétrique. Les trois bretelles 311, 312 et 313 sont en appui sur la plaque collectrice 21 entre deux tubes 5. Plus particulièrement, la bretelle 311 et la bretelle 312 sont en appui sur la plaque collectrice 21 de part et d'autre du tube partiellement obturés 51 de la partie chaude 19a , la bretelle 311 et la bretelle 313 sont en appui sur la plaque collectrice 21 de part et d'autre du tube partiellement obturés 52 de la partie froide 19b. Les deux tubes partiellement obturés 51 et 52 sont encadrés par la deuxième bretelle 312 et la troisième bretelle 313. Les trois bretelles 311, 312 et 313 sont ainsi reliées par les deux languettes 43a et 43b. Comme dans la variante de la figure 10a, la cloison transversale 17 comprend deux nervures 41 perpendiculaires s'étendant de part et d'autre de la cloison transversale 17 et situées au niveau des deux languettes 43a et 43b.

Dans la variante de la figure 10c, ladite partie d'obturation 37 est formée par une seule languette 43 issue de matière de ladite bretelle 31. Ainsi, la portion centrale 31a est élargie sur une partie seulement de sa longueur par ladite languette 41 qui s'étend sur toute la largeur des tubes 51 et 52. Ainsi, la section de passage des tubes 51 et 52 est réduite selon leur longueur. Autrement dit, les deux tubes 51 et 52 sont partiellement obturés sur toute leur largeur et seulement sur une partie de leur longueur. Là encore, ladite partie d'obturation 37 est maintenue en place par la cloison transversale 17 qui comprend deux nervures 41 qui lui sont par exemple perpendiculaires, s'étendant de part et d'autre de la cloison transversale 17 en direction desdits tubes partiellement obturés 51 et 52. Les deux nervures 41 sont situées à proximité des extrémités de ladite languette 43 de manière à faire pression sur celle-ci lors de l'assemblage de la boîte collectrice 9b. La languette 43 s'étend donc au moins entre les deux nervures 41.

Dans la variante de la figure 10d, ladite partie d'obturation 37 est formée par une seule languette 43 comme décrit dans la figure 10c. En revanche, ledit joint d'étanchéité 25 comprend une deuxième bretelle 312 et une troisième bretelle 313 comme précédemment décrit dans la variante de la figure 10b. Les trois bretelles 311, 312 et 313 sont ainsi reliées par ladite languette 43. Comme dans la variante de la figure 6c, la cloison 17 comprend deux nervures 41, par exemple perpendiculaires, situées à proximité des extrémités de ladite languette 43.

En résumé :
- dans les modes de réalisation représentés aux figures 3 à 6, un seul tube 51 situé du côté de ladite partie chaude 19a est partiellement obturé ;
- dans les modes de réalisation représentés aux figures 7 à 10, deux tubes 51 et 52 situés de part et d'autre de la cloison transversale 17, c'est-à-dire un tube 51 de la partie chaude 19a et un tube 52 de la partie froide 19b, sont partiellement obturés ;
- dans les modes de réalisation représentés aux figures 3 à 5 et 7 à 9, le ou desdits tubes 51 et/ou 52 sont partiellement obturés selon leur largueur ;
- dans les modes de réalisation représentés aux figures 6 et 10, le ou desdits tubes 51 et/ou 52 sont partiellement obturés selon leur longueur ;
- dans les modes de réalisation représentés aux figures 3 et 7, ladite cloison transversale 17 est une cloison simple, plane ;
- dans les modes de réalisation représentés aux figures 4, 6, 8 et 10, ladite cloison transversale 17 comprend des nervures 41, qui lui sont par exemple perpendiculaires, comme moyens d'appui ; Les nervures peuvent également faire un angle avec la cloison égal à 45° pour former un K s i les nervures sont jointes, mais elle peuvent être disjointes et l'angle peut être tout autre.
- dans les modes de réalisation représentés aux figures 5 et 9, ladite cloison transversale 17 est une cloison double ;
- dans les modes de réalisation représentés aux figures 4 à 6, ledit joint d'étanchéité 25 comprend un détrompeur 39 s'étendant sur un côté de ladite cloison transversale 17 ;
- dans les modes de réalisation représentés aux figures 6 et 10, ladite partie d'obturation 37 comprend au moins une languette 43, ladite languette 43 pouvant s'étendre entre deux bretelles transversales 31 dudit joint d'étanchéité 25.

De manière générale, ledit joint d'étanchéité 25 est réalisé en une matière élastomère appropriée. Ladite partie d'obturation 37 est avantageusement issue de matière avec le joint d'étanchéité 25. Autrement dit, elle est aussi préférentiellement réalisée en une matière élastomère appropriée.

Concernant le montage des tubes et de la plaque collectrice, les éléments sont, par exemple, en aluminium et/ou alliage d'aluminium et sont fixés les uns aux autres de préférence par brasage.

Par ailleurs, ladite cloison 17 pourra être formée en continuité de matière du reste du couvercle, notamment par déformation en creux de l'enveloppe extérieure du couvercle ou en saillie à l'intérieur du couvercle. Elle pourra encore être rapportée.

Il est à noter que des variantes de réalisation sont bien sûr possibles et que la présente invention ne se limite pas au type de boîte collectrice et d'échangeur décrits ci-dessus. Notamment, on peut également envisager un mode de réalisation, non représenté, dans lequel l'échangeur de chaleur comprend deux boîtes collectrices à double compartiments. Dans ce type d'échangeur, deux fluides différents, notamment de températures différentes parcours chacune des parties du faisceau. Dans un tel mode de réalisation, le ou lesdits tubes peuvent être partiellement obturés à chacune de leur ouverture. De façon avantageuse, ledit joint d'étanchéité de chacune des deux boîtes collectrices est apte à obturer partiellement l'ouverture d'au moins un tube.

L'invention s'applique également en outre aux échangeurs de chaleur dont le faisceau de tubes comporte plusieurs rangées de tubes. Dans ce cas, le tube partiellement obturé comprend plusieurs tubes localisés sur la même rangée. A l'image de la description ci-dessus, les tubes d'une même rangée peuvent être tous partiellement obturés. Un mode de réalisation alternatif est l'obturation partielle ou totale de certains tubes alors que les autres tubes de la rangée ne sont pas obturés. Dans tous les cas, le tube virtuel équivalent aux tubes de la rangée est un tube partiellement obturé.

## Revendications

1. Échangeur de chaleur (1), notamment pour véhicule automobile, comprenant une boîte collectrice (9a) et un faisceau (3) de tubes (5), ladite boîte collectrice (9a) comprenant une plaque collectrice (21), un couvercle (23) et un joint d'étanchéité (25) localisé entre la plaque collectrice (21) et le couvercle (23), ladite boîte collectrice (9a) étant divisée en deux compartiments (15a et 15b) par une cloison transversale (17), lesdits compartiments (15a et 15b) étant configurés pour communiquer respectivement avec deux parties du faisceau (19a et 19b), ledit joint d'étanchéité (25) isolant lesdits compartiments (15a et 15b) l'un de l'autre et obturant partiellement l'ouverture d'au moins un tube, dit tube partiellement obturé (51, 52), débouchant dans ladite boîte collectrice (9a) à proximité de ladite cloison transversale (17), ladite cloison transversale (17) comprenant au moins un moyen d'appui (41) apte à faire pression sur ledit joint d'étanchéité (25) au niveau du ou desdits tubes partiellement obturés (51, 52), **caractérisé en ce que** le ou lesdits moyens d'appui sont des nervures (41), perpendiculaires à ladite cloison transversale (17).

2. Échangeur de chaleur (1) selon la revendication 1, dans laquelle ledit tube partiellement obturé (51, 52) est le tube (5) débouchant au plus proche de la cloison transversale (17) dans le compartiment (19a, 19b).

3. Échangeur de chaleur (1) selon l'une quelconque des revendications 1 ou 2, dans laquelle ledit joint d'étanchéité (25) est configuré pour conférer en outre une étanchéité périphérique entre la plaque (21) et le couvercle (23).

4. Échangeur de chaleur (1) selon l'une quelconque des revendications précédentes, dans laquelle ledit joint d'étanchéité (25) comprend un détrompeur s'étendant sur un côté de ladite cloison transversale (17).

5. Échangeur de chaleur (1) selon l'une quelconque des revendications précédentes, dans laquelle ledit joint d'étanchéité (25) comprend une partie d'obturation (37) apte à obturer partiellement l'ouverture du ou desdits tubes partiellement obturés (51, 52).

6. Échangeur de chaleur (1) selon la revendication précédente, dans laquelle ledit joint d'étanchéité (25) est de contour sensiblement rectangulaire avec deux grands côtés (25a) et deux petits côtés (25b), la partie d'obturation (37) est localisée sur une bretelle (31) s'étendant entre les deux grands côtés (25a).

7. Échangeur de chaleur (1) selon l'une quelconque des revendications 5 ou 6, dans laquelle ladite partie d'obturation (37) est un élargissement localisé de ladite bretelle (31).

8. Échangeur de chaleur (1) selon l'une quelconque des revendications précédentes, dans laquelle ladite cloison transversale (17) comprend deux parois parallèles (17a et 17b) reliées par une face (17c) en appui sur le joint d'étanchéité (25).

9. Échangeur de chaleur (1) selon l'une quelconque des revendications précédentes, dans lequel le ou lesdits tubes partiellement obturés (51, 52) ont une section de passage réduite selon leur largeur.

10. Échangeur de chaleur (1) selon l'une quelconque des revendications précédentes, dans lequel le ou lesdits tubes partiellement obturés (51, 52) ont une section de passage réduite selon leur longueur.

11. Échangeur de chaleur (1) selon l'une quelconque des revendications précédentes, dans lequel entre 25 et 75% de la section du ou de chacun desdits tubes partiellement obturés (51, 52) est obturée.

12. Échangeur de chaleur (1) selon l'une quelconque des revendications précédentes, dans lequel l'une des deux parties, dite partie chaude (19a), est d'une température supérieure à la température de l'autre partie, dite partie froide (19b), le ou lesdits tubes partiellement obturés (51, 52) étant situés du côté de ladite partie chaude (19a).

13. Échangeur de chaleur (1) selon la revendication précédente comprenant en outre au moins un tube partiellement obturé (51, 52) dans ladite partie froide (19b).

## Patentansprüche

1. Wärmetauscher (1), insbesondere für ein Kraftfahrzeug, umfassend einen Sammelbehälter (9a) und ein Bündel (3) aus Rohren (5) der Sammelbehälter (9a) umfassend eine Sammelplatte (21), einen Deckel (23) und eine Dichtung (25), die sich zwischen der Sammelplatte (21) und dem Deckel (23) befindet, wobei der Sammelbehälter (9a) durch eine Quertrennwand (17) in zwei Kammern (15a und 15b) unterteilt ist, wobei die Kammern (15a und 15b) dazu ausgebildet sind, jeweils mit zwei Abschnitten des Bündels (19a und 19b) in Verbindung zu stehen, wobei die Dichtung (25) die Kammern (15a und 15b) voneinander isoliert und die Öffnung mindestens eines Rohrs, das als teilweise verschlossenes Rohr (51, 52) bezeichnet wird, das in der Nähe der Quertrennwand (17) in den Sammelbehälter (9a) mündet, teilweise verschließt, die Quertrennwand (17) umfassend mindestens ein Stützmittel (41), das geeignet ist, an dem oder den teilweise verschlossenen Rohren (51, 52) Druck auf die Dichtung (25) auszuüben, **dadurch gekennzeichnet, dass** das oder die Stützmittel Rippen (41) sind, die senkrecht zu der Quertrennwand (17) verlaufen.

2. Wärmetauscher (1) nach Anspruch 1, wobei das teilweise verschlossene Rohr (51, 52) das Rohr (5) ist, das am nächsten zu der Quertrennwand (17) in die Kammer (19a, 19b) mündet.

3. Wärmetauscher (1) nach einem der Ansprüche 1 oder 2, wobei die Dichtung (25) dazu ausgebildet ist, ferner eine Randabdichtung zwischen der Platte (21) und dem Deckel (23) herzustellen.

4. Wärmetauscher (1) nach einem der vorhergehenden Ansprüche, wobei die Dichtung (25) eine Unverwechselbarkeitseinrichtung umfasst, die sich auf einer Seite der Quertrennwand (17) erstreckt.

5. Wärmetauscher (1) nach einem der vorhergehenden Ansprüche, wobei die Dichtung (25) einen Verschlussabschnitt (37) umfasst, der geeignet ist, die Öffnung des oder der teilweise verschlossenen Rohre (51, 52) teilweise zu verschließen.

6. Wärmetauscher (1) nach dem vorhergehenden Anspruch, wobei die Dichtung (25) in der Kontur im Wesentlichen rechteckig ist, mit zwei großen Seiten (25a) und zwei kleinen Seiten (25b), der Verschlussabschnitt (37) sich auf einem Steg (31) befindet, der sich zwischen den zwei großen Seiten (25a) erstreckt.

7. Wärmetauscher (1) nach einem der Ansprüche 5 oder 6, wobei der Verschlussabschnitt (37) eine verortete Erweiterung des Stegs (31) ist.

8. Wärmetauscher (1) nach einem der vorhergehenden Ansprüche, wobei die Quertrennwand (17) zwei Parallelwände (17a und 17b) umfasst, die durch eine Fläche (17c) verbunden sind, die auf der Dichtung (25) aufliegt.

9. Wärmetauscher (1) nach einem der vorhergehenden Ansprüche, wobei das oder die teilweise verschlossenen Rohre (51, 52) einen Durchgangsquerschnitt aufweisen, der in ihrer Breite verringert ist.

10. Wärmetauscher (1) nach einem der vorhergehenden Ansprüche, wobei das oder die teilweise verschlossenen Rohre (51, 52) einen Durchgangsquerschnitt aufweisen, der in ihrer Länge verringert ist.

11. Wärmetauscher (1) nach einem der vorhergehenden Ansprüche, wobei zwischen 25 und 75 % des Querschnitts des oder jedes teilweise verschlossenen Rohrs (51, 52) verschlossen ist.

12. Wärmetauscher (1) nach einem der vorhergehenden Ansprüche, wobei der eine der zwei Abschnitte, der als warmer Abschnitt (19a) bezeichnet wird, eine Temperatur aufweist, die höher als die Temperatur des anderen Abschnitts ist, der als kalter Abschnitt (19b) bezeichnet wird, wobei sich das oder die teilweise verschlossenen Rohre (51, 52) auf der Seite des warmen Abschnitts (19a) befinden.

13. Wärmetauscher (1) nach dem vorhergehenden Anspruch, ferner umfassend mindestens ein teilweise verschlossenes Rohr (51, 52) in dem kalten Abschnitt (19b).

## Claims

1. Heat exchanger (1), in particular for a motor vehicle, comprising a header box (9a) and a bundle (3) of tubes (5), said header box (9a) comprising a header plate (21), a cover (23) and a seal (25) positioned between the header plate (21) and the cover (23), said header box (9a) being divided into two compartments (15a and 15b) by a transverse partition (17), said compartments (15a and 15b) being configured to communicate respectively with two parts of the bundle (19a and 19b), said seal (25) isolating said compartments (15a and 15b) from one another and partially blocking the opening of at least one tube, said partially blocked tube (51, 52) opening into said header box (9a) close to said transverse partition (17), said transverse partition (17) comprising at least one pressing means (41) that is able to exert pressure on said seal (25) at the one or more partially blocked tubes (51, 52), **characterized in that** the pressing means is/are ribs (41), perpendicular to said transverse partition (17) .

2. Heat exchanger (1) according to Claim 1, in which said partially blocked tube (51, 52) is the tube (5) that opens closest to the transverse partition (17) in the compartment (19a, 19b).

3. Heat exchanger (1) according to either one of Claims 1 and 2, in which said seal (25) is configured to further provide peripheral sealing between the plate (21) and the cover (23).

4. Heat exchanger (1) according to any one of the preceding claims, in which said seal (25) comprises a poka-yoke extending on one side of the said transverse partition (17).

5. Heat exchanger (1) according to any one of the preceding claims, in which said seal (25) comprises a blocking part (37) that is able to partially block the opening of the partially blocked tube or tubes (51, 52).

6. Heat exchanger (1) according to the preceding claim, in which said seal (25) has an essentially rectangular contour, with two long sides (25a) and two short sides (25b), the blocking part (37) is located on a strap (31) extending between the two long sides (25a).

7. Heat exchanger (1) according to either one of Claims 5 and 6, in which said blocking part (37) is a localised widening of said strap (31).

8. Heat exchanger (1) according to any one of the preceding claims, in which said transverse partition (17) comprises two parallel walls (17a and 17b) that are connected by a face (17c) pressing against the seal (25).

9. Heat exchanger (1) according to any one of the preceding claims, in which the partially blocked tube or tubes (51, 52) have a passage cross section that is reduced in the direction of their width.

10. Heat exchanger (1) according to any one of the preceding claims, in which the partially blocked tube or tubes (51, 52) have a passage cross section that is reduced in the direction of their length.

11. Heat exchanger (1) according to any one of the preceding claims, in which between 25 and 75% of the cross section of the partially blocked tube or of each of said partially blocked tubes (51, 52) is blocked.

12. Heat exchanger (1) according to any one of the preceding claims, in which one of the two parts, referred to as the hot part (19a), is at a temperature above the temperature of the other part, referred to as the cold part (19b), the partially blocked tube or tubes (51, 52) being located on the side of said hot part (19a).

13. Heat exchanger (1) according to the preceding claim, further comprising at least one partially blocked tube (51, 52) in said cold part (19b).
